**Europäisches Patentamt**

**European Patent Office**

**Office européen des brevets**

(19)

(11) Veröffentlichungsnummer: **0 355 191**

**A1**

(12) # EUROPÄISCHE PATENTANMELDUNG

(21) Anmeldenummer: 88113815.0

(51) Int. Cl.4: **G21C 19/36**

(22) Anmeldetag: 24.08.88

(43) Veröffentlichungstag der Anmeldung:
28.02.90 Patentblatt 90/09

(84) Benannte Vertragsstaaten:
DE ES SE

(71) Anmelder: **Siemens Aktiengesellschaft**
**Wittelsbacherplatz 2**
**D-8000 München 2(DE)**

(72) Erfinder: **Hummel, Wolfgang**
**Sudetenstrasse 1**
**D-8521 Weisendorf(DE)**

(54) **Vorrichtung zum Einsetzen von Brennstäben in eine Büchse.**

(57) Eine leicht steuerbare Vorrichtung zum Einsetzen langgestreckter, zueinander paralleler Brennstäbe (36) in eine langgestreckte Büchse (7) hat einen Brennstabpositionierarm (33; 34) zum Einschieben durch einen seitlichen Querschlitz (7c) der Büchse (7); am Einschiebeende des Brennstabpositionierarmes (33; 34) ist ein Anlagekörper (35) für die Brennstäbe (36) angebracht, der um eine Schwenkachse (37) innerhalb eines Schwenkwinkels (σ) hin und her schwenkbar ist und an der Mantelfläche zwei um seine Schwenkachse (37) versetzt nebeneinander angeordnete Brennstabanlageflächen (47) und (48) bildet.

FIG 1

EP 0 355 191 A1

## Vorrichtung zum Einsetzen von Brennstäben in eine Büchse

Die Erfindung betrifft eine Vorrichtung nach dem Gattungsbegriff des Patentanspruches 1.

Mit einer solchen Vorrichtung werden z.B. Brennstäbe aus bestrahlten und abgebrannten Kernreaktorbrennelementen in möglichst dichter Packung in die Büchse eingesetzt und in der Büchse bis zur Wiederaufarbeitung gelagert. Auf diese Weise können verglichen mit dem Zwischenlagern der kompletten abgebrannten Kernreaktorbrennelemente Lagerraum und Transportkosten eingespart werden.

Der Erfindung liegt die Aufgabe zugrunde, diese Vorrichtung weiterzubilden und insbesondere ihre Steuerbarkeit zu erleichtern.

Zur Lösung dieser Aufgabe hat eine Vorrichtung der eingangs erwähnten Art erfindungsgemäß die Merkmale des kennzeichnenden Teiles des Patentanspruches 1.

Der Anlagekörper für die Brennstäbe dieser Vorrichtung ist schnell und einfach in der Büchse zu positionieren. Ferner können durch einfaches Schwenken mit dem Anlagekörper eine Reihe neuer Führungsöffnungen für die einzusetzenden Brennstäbe in der Büchse gebildet werden, nachdem die vor dem Schwenken durch den Anlagekörper gebildete Reihe von Führungsöffnungen mit Brennstäben aufgefüllt ist.

Die Patentansprüche 2 bis 6 sind auf vorteilhafte Weiterbildungen dieser Vorrichtung gerichtet, durch die das Einsetzen der Brennstäbe in die Büchse erleichtert wird.

Die Erfindung und ihre Vorteile seien anhand der Zeichnung an einem Ausführungsbeispiel näher erläutert:

FIG 1 zeigt in perspektivischer Darstellung eine Vorrichtung gemäß der Erfindung.

FIG 2 zeigt eine Draufsicht auf die Vorrichtung nach FIG 1.

FIG 3 zeigt einen Schnitt entsprechend der strichpunktierten Linie III-III in FIG 2.

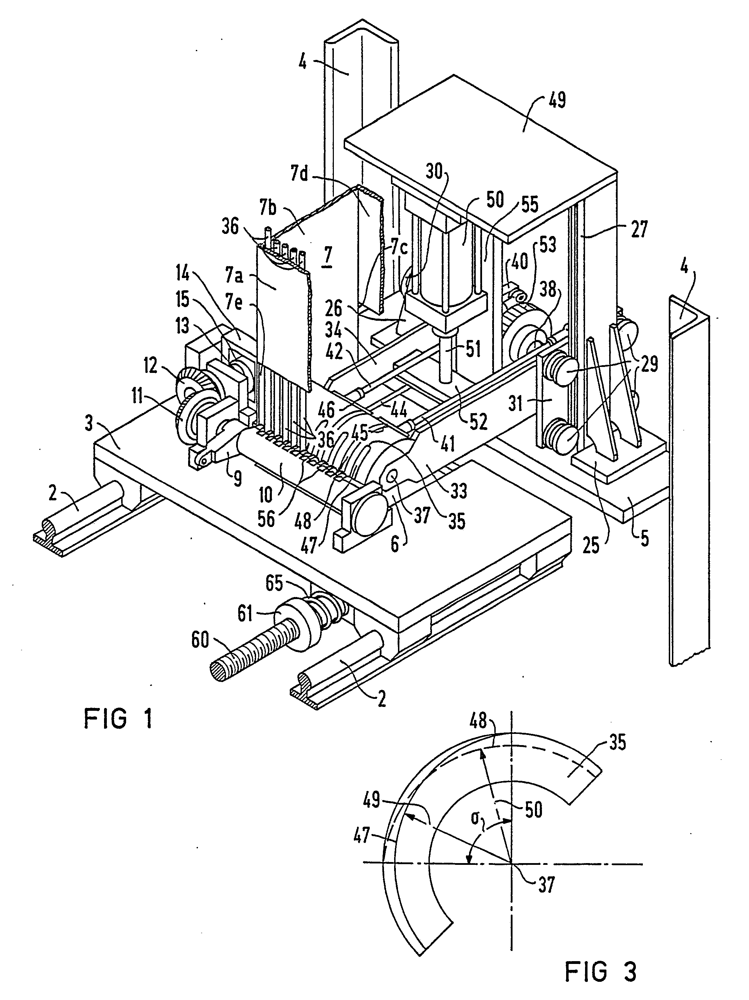

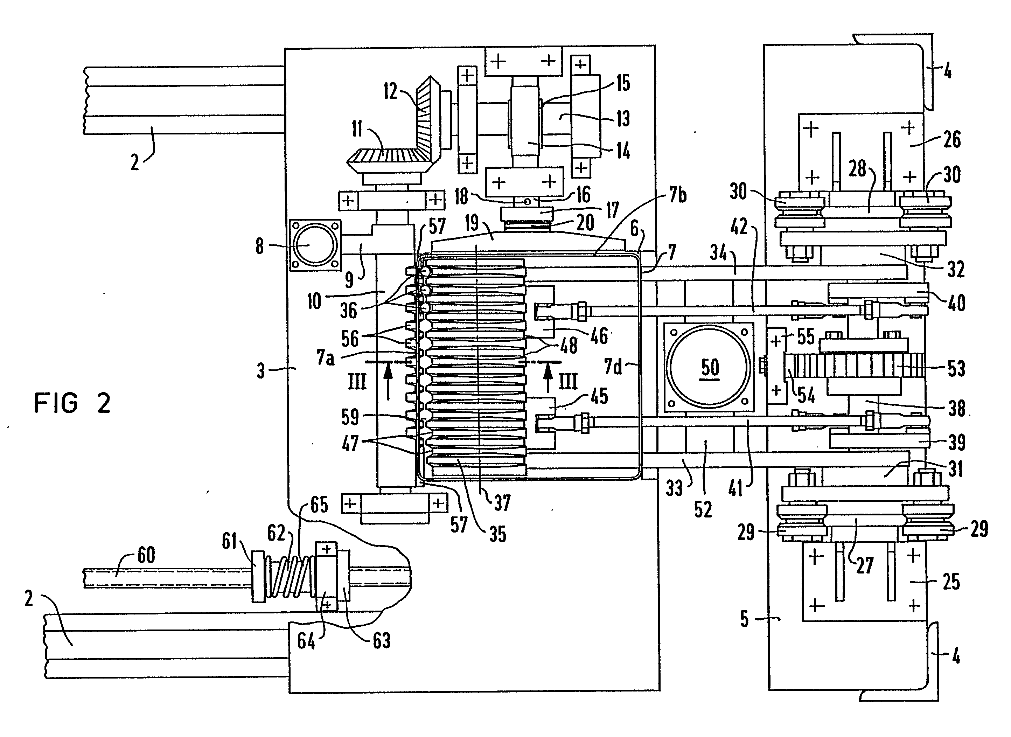

Die Vorrichtung nach den Figuren 1 und 2 weist zwei Führungsschienen 2 für eine Grundplatte 3 auf. Diese Führungsschienen 2 sind ortsfest in Bezug auf ein Gestell 4, an dem eine Tragplatte 5 befestigt ist.

Die Grundplatte 3 weist eine Durchführung 6 auf, durch die eine langgestreckte Büchse 7 mit quadratischem Querschnitt greift. Die Längsachse dieser Büchse 7 ist rechtwinklig zur Grundplatte 3 und zu den zueinander parallelen Führungsschienen 2.

Auf der Grundplatte 3 sitzt ein mit Druckluft beaufschlagbarer Zylinder 8, in dem sich ein rechtwinklig zur Grundplatte 3 verschiebbarer Kolben befindet. An diesem Kolben ist ein Hebel 9 angelenkt, der an einer langgestreckten drehbaren Exzenterwelle 10 befestigt ist. Diese Exzenterwelle 10 hat eine zur Grundplatte 3 und zu einer Seitenwand 7a der Büchse 7 parallele Drehachse, um die sie auf der Grundplatte 3 drehbar gelagert ist.

Auf der Exzenterwelle 10 sitzt ferner an einem Ende ein Kegelrad 11 konzentrisch mit der Drehachse der Exzenterwelle 10. Das Kegelrad 11 greift in ein weiteres Kegelrad 12. Dieses Kegelrad 12 sitzt auf einer Welle 13, die ebenfalls mit zur Grundplatte 3 paralleler Drehachse auf dieser Grundplatte 3 drehbar gelagert ist. Die Drehachsen der Exzenterwelle 10 und der Welle 13 sind zueinander rechtwinklig.

Auf der Welle 13 sitzt ein in einer Kulisse 14 geführter Exzenter 15. An der Kulisse 14 befindet sich eine Hohlstange 16 mit einem Abstützkörper 17. Innerhalb dieser Hohlstange 16 ist eine in der Zeichnung nicht erkennbare Stempelstange geführt, die an der Hohlstange 16 durch einen Stift 18 gesichert ist. An einem Ende der Stempelstange sitzt außerhalb der Hohlstange 16 ein Haltestempel 19, der flach an einer zur Seitenwand 7a benachbarten Seitenwand 7b der Büchse 7 anliegen kann. Zwischen dem Abstützkörper 17 und dem Haltestempel 19 sitzt auf der Stempelstange ein aus Tellerfedern 20 gebildetes Federpaket.

Auf der Tragplatte 5 sind zwei Böcke 25 und 26 angeordnet. Am Bock 25 ist eine Schiene 27 und am Bock 26 eine Schiene 28 angebracht. Die Schienen 27 und 28 sind rechtwinklig zur Tragplatte 5 und damit auch rechtwinklig zur Grundplatte 3 und parallel zur Längsrichtung der Büchse 7. Auf jeder Schiene 27 und 28 ist je ein mit Führungsrollen 29 bzw. 30 versehener Schlitten 31 bzw. 32 parallel zur Längsrichtung der Büchse 7 verschiebbar geführt.

An jedem Schlitten 31 bzw. 32 ist ein Brennstabpositionierarm 33 bzw. 34 angebracht. Die Brennstabpositionierarme 33 und 34 sind parallel zur Tragplatte 5 und zur Grundplatte 3 und rechtwinklig zur Längsachse der Büchse 7. Jeder Brennstabpositionierarm 33 bzw. 34 bildet ein Einschiebende zum Einschieben in die Büchse 7 durch einen Querschlitz 7c in der der Seitenwand 7a gegenüberliegenden Seitenwand 7d der Büchse 7. An den beiden Einschiebenden der Brennstabpositionierarme 33 und 34 ist ein Anlagekörper 35 für in die Büchse 7 einzusetzende Brennstäbe 36 angebracht. Dieser Anlagekörper 35 ist um eine Schwenkachse 37 hin und her schwenkbar, die zur Einschieberichtung der Brennstabpositionierarme 33 und 34 in die Büchse 7 und zur Längsrichtung der Büchse 7 rechtwinklig ist. Diese Schwenkachse 37 ist ferner parallel zu den Seitenwänden 7a und 7d der Büchse 7.

In beiden Schlitten 31 und 32 ist eine Welle 38 gelagert, die parallel zur Schwenkachse 37 des Anlagekörpers 35 ist. Auf dieser Welle 38 sitzen zwei Hebel 39 und 40, die jeder zwei Hebelarme bilden. An jedem Hebelarm der beiden Hebel 39 und 40 ist je eine Stange angelenkt. Von diesen vier Stangen erkennt man in FIG 1 die Stangen 42 und 44 am Hebel 40 und die Stange 41 am Hebel 39. Mit ihren anderen Enden sind diese vier Stangen an Haltern 45 und 46 angelenkt, die sich an der Seite des Anlagekörpers 35 befestigt sind.

Dieser Anlagekörper 35 ist, wie insbesondere aus FIG 3 erkannt werden kann, eine Rohrhalbschale. Innerhalb eines Schwenkwinkels σ bezogen auf die Schwenkachse 37 hat dieser Anlagekörper 35 an der Mantelfläche mehrere in Richtung der Schwenkachse 37 versetzt nebeneinander angeordnete Brennstabanlageflächen 47 und 48. Eine Brennstabanlagefläche 47 geht von einem Segment, in dem sie einen kleineren Radiusabstand 49 von der Schwenkachse 37 hat als die beiden ihr benachbarten Brennstabanlageflächen 48, in ein anderes Segment über, in dem sie einen größeren Radiusabstand 49 von der Schwenkachse 37 hat als diese benachbarten Anlageflächen 48. Ferner steigen die Radiusabstände 49 und 50 zweier benachbarter Anlageflächen 47 und 48 von der Schwenkachse 37 innerhalb des Schwenkwinkels σ gegensinnig stufenlos an.

Auf den Böcken 25 und 26 ist eine Platte 49 befestigt, auf deren Unterseite sich ein mit Druckluft beaufschlagbarer Zylinder 50 befindet. Innerhalb dieses Zylinders 50 befindet sich ein rechtwinklig zur Tragplatte 5 verschiebbarer Kolben mit einer Kolbenstange 51, die an einer Querplatte 52 befestigt ist. Diese Querplatte 52 ist ihrerseits an den Brennstabpositionierarmen 33 und 34 befestigt.

Auf der Welle 38 sitzt schließlich ein Zahnrad 53, das in eine Zahnstange 54 greift. Diese Zahnstange 54 sitzt auf einer Platte 55, die rechtwinklig auf der Tragplatte 5 steht und an der Tragplatte 5 und an der Platte 49 befestigt ist. Damit steht auch die Zahnstange 54 rechtwinklig zur Tragplatte 5.

Die Exzenterwelle 10 bildet einen Gegenkörper zum Anlagekörper 35. Dementsprechend hat die Exzenterwelle 10 Rillen 56 in Umfangsrichtung dieser Exzenterwelle 10, die eine Zahnung außen auf der Mantelfläche bilden. Diese die Zahnung bildenden Rillen 56 können durch Drehen der Exzenterwelle 10 durch einen Querschlitz 7e in der Seitenwand 7a der Büchse 7 in die Büchse 7 eingeschoben werden. Der Querschlitz 7e befindet sich in derselben Höhe wie der Querschlitz 7c in der gegenüberliegenden Seitenwand 7d der Büchse 7. Beim Einschieben der die Zahnung bildenden Rillen 56 der Exzenterwelle 10 in den Querschlitz 7e legt sich zugleich eine Anlagefläche 57 auf der Mantelfläche der Exzenterwelle 10 zum Halten der Büchse 7 an die Kante der Seitenwand 7b im Querschlitz 7e an.

Nach Einsetzen der Büchse 7 in die Durchführung 6 wird der Zylinder 8 mit Druckluft beaufschlagt. Dadurch wird die Exzenterwelle 10 gedreht und die durch die Zahnung gebildeten Rillen 56 in den Querschlitz 7e der Büchse 7 eingeschoben. Zugleich wird der Haltestempel 19 außen gegen die Seitenwand 7b der Büchse 7 gepreßt, so daß die Büchse 7 fest in ihrem von der Grundplatte 3 gebildeten Halter mit zur Grundplatte 3 rechtwinkliger Längsachse gehalten ist.

Durch Einschalten eines nicht dargestellten Elektromotors wird eine Spindel 60 angetrieben. Dieser Spindel 60 ist eine Spindelmutter 61 zugeordnet, die an einer Hülse 62 befestigt ist. An der Hülse 62 ist ein Anschlagkörper 63 befestigt. Zwischen der Spindelmutter 61 und dem Anschlagkörper 63 ist ein Gleitkörper 64 auf der Hülse 62 verschiebbar angeordnet und an der Unterseite der Grundplatte 3 befestigt. Zwischen Spindel mutter 61 und Gleitkörper 64 sitzt auf der Hülse 62 eine Druckfeder als federndes Rückstellelement 65, die sich sowohl an der Spindelmutter 61 als auch am Gleitkörper 64 abstützt. Deshalb wird die Grundplatte 3 auf den Führungsschienen 2 zur Tragplatte 5 hin verschoben, so daß die Brennstabpositionierarme 33 und 34 mit dem Anlagekörper 35 durch den Querschlitz 7c der Büchse 7 in diese Büchse 7 bis zum Anschlag des Anlagekörpers 35 an der Exzenterwelle 10 einfahren. Hierbei bilden die Anlageflächen 47 des Anlagekörpers 35 mit den Rillen 56 der Zahnung der Exzenterwelle 10 Führungskanäle 59 in Längsrichtung der Büchse 7 an der Innenseite der Seitenwand 7a dieser Büchse 7.

In diese Führungskanäle 59 werden sodann vom Oberende der Büchse 7 die Brennstäbe 36 eingeschoben. Sodann wird der Zylinder 50 mit Druckluft beaufschlagt und die Kolbenstange 51 in eine andere von zwei Endlagen bewegt. Dadurch werden die Schlitten 31 und 32 auf die Platte 49 zu verschoben. Zugleich rollt das Zahnrad 53 an der Zahnstange 54 ab und schwenkt die Hebel 39 und 40. Dadurch wird der Anlagekörper 35 über die Stangen 41 bis 44 um die Schwenkachse 37 um den Schwenkwinkel σ geschwenkt. Hierbei rollt der Anlagekörper 35 an den Brennstäben 36 ab und bildet mit den an der Innenseite der Seitenwand 7a der Büchse 7 anliegenden Brennstäben 36 neue Führungskanäle in Längsrichtung der Büchse 7. Jeder neue Führungskanal befindet sich zwischen zwei an der Innenseite der Seitenwand 8 anliegenden Brennstäben 36. Während dieses Schwenkvorganges wird die Grundplatte 3, die der Halter für die Büchse 7 ist, gegen die Druckfeder als federndes Rückstellelement 65 auf den Führungsschienen 2 von der Tragplatte 5 weggeschoben.

Hierauf werden in die neuen Führungskanäle weitere Brennstäbe eingeschoben. Anschließend wird die Druckfeder nach Einschalten des Elektromotors durch Verfahren der Grundplatte 3 auf den Führungsschienen 2 weg von der Tragplatte 5 entlastet. Hierauf wird der Zylinder 50 so mit Druckluft beaufschlagt, daß sich die Kolbenstange 51 in ihre entgegengesetzte Endlage bewegt. Dadurch schwenkt der Anlagekörper 35 wieder um den Schwenkwinkel σ zurück und rollt dabei auf den in der Büchse 7 befindlichen Brennstäben in die in FIG 1 dargestellte Position ab. Dadurch werden wiederum Führungskanäle in Längsrichtung der Büchse 7 zwischen den zuletzt eingesetzten Brennstäben zum Einsetzen neuer Brennstäbe gebildet.

Durch Wiederholen dieses Wechselspiels unter allmählichem Vergrößern des Abstandes der Grundplatte 3 von der Tragplatte 5 kann die Büchse 7 schließlich komplett mit Brennstäben in dichter Packung aufgefüllt werden.

### Ansprüche

1. Vorrichtung zum Einsetzen langgestreckter, zueinander paralleler Brennstäbe in eine langgestreckte Büchse, die einen rechteckigen, insbesondere quadratischen Querschnitt hat, mit einem Halter für die Büchse und einem Brennstabpositionierarm, der ein Einschiebende zum Einschieben durch einen seitlichen Querschlitz der Büchse in einer zur Längsrichtung der Büchse rechtwinkligen Einschieberichtung hat,
**dadurch gekennzeichnet,**
daß am Einschiebeende des Brennstabpositionierarmes (33; 34) ein Anlagekörper (35) für die Brennstäbe (36) angebracht ist, der um eine zur Einschieberichtung des Brennstabpositionierarmes (33; 34) und zur Längsrichtung der Büchse (7) rechtwinklige Schwenkachse (37) innerhalb eines Schwenkwinkels (σ) hin und her schwenkbar ist und der an der Mantelfläche zwei um seine Schwenkachse (37) nach außen gewölbte, in Richtung der Schwenkachse (37) versetzt nebeneinander angeordnete Brennstabanlageflächen (47) und (48) bildet,
daß die eine Brennstabanlagefläche (47) bzw. (48) von einem Segment, in dem sie einen kleineren Radiusabstand (49) bzw. (50) von der Schwenkachse (37) als die andere Brennstabanlagefläche (48) bzw. (47) hat, in ein anderes Segment übergeht, in dem sie einen größeren Radiusabstand (49) bzw. (50) von dieser Schwenkachse (37) als die andere Brennstabanlagefläche (48) bzw. (47) hat, und
daß der Radiusabstand (49; 50) der beiden Anlageflächen (47; 48) von der Schwenkachse (37) innerhalb des Schwenkwinkels (σ) gegensinnig stufenlos ansteigt.

2. Vorrichtung nach Anspruch 1,
**dadurch gekennzeichnet,**
daß der Anlagekörper (35) am Brennstabpositionierarm (33; 34) und der Halter (3) für die Büchse (7) relativ zueinander in bzw. entgegen der Einschieberichtung des Brennstabpositionier armes (33, 34) gegen ein federndes Rückstellelement (65) verschiebbar sind.

3. Vorrichtung nach Anspruch 1,
**dadurch gekennzeichnet,**
daß der Brennstabpositionierarm (33; 34) mit dem Anlagekörper (35) und der Halter (3) für die Büchse (7) relativ zueinander in Längsrichtung der Büchse (7) verschiebbar sind.

4. Vorrichtung nach Anspruch 1,
**dadurch gekennzeichnet,**
daß am Halter (3) für die Büchse (7) gegenüber dem Anlagekörper (35) ein Gegenkörper mit einer Zahnung, die Lücken in Längsrichtung der Büchse (7) bildet, zum Einschieben durch einen weiteren seitlichen Querschlitz (7e) der Büchse (7) angebracht ist.

5. Vorrichtung nach Anspruch 4,
**dadurch gekennzeichnet,**
daß der Gegenkörper eine langgestreckte drehbare, quer zur Längsrichtung der Büchse (7) angeordnete Exzenterwelle (10) ist mit die Zahnung bildenden Rillen (56) in Umfangrichtung außen auf der Mantelfläche.

6. Vorrichtung nach Anspruch 4,
**dadurch gekennzeichnet,**
daß der Gegenkörper zum Halten der Büchse (7) eine Anlagefläche (57) für die Büchse (7) bildet.

FIG 1

FIG 3

FIG 2

EP 0 355 191 A1

88 P 3360 E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 683 110 (BAUDRO) <br> * Spalte 4, Zeilen 10-23; Spalte 6, Zeilen 24-42; Figuren 1-6,12,13 * | 1,2,4 | G 21 C 19/36 |
| A | EP-A-0 128 236 (SIEMENS) <br> * Seite 4, Zeilen 21-36; Seite 5, Zeilen 1-15; Figuren 11-14 * | 1 | |
| A | DE-A-3 530 410 (STEAG) <br> * Zusammenfassung; Figur 1 * | 1 | |
| A | DE-U-8 505 346 (SIEMENS) <br> * Zusammenfassung; Figuren 1,2 * | 1 | |
| A | EP-A-0 066 695 (WESTINGHOUSE) <br> * Zusammenfassung; Figuren * | 1 | |

RECHERCHIERTE
SACHGEBIETE (Int. Cl.4)

G 21 C 19/00

Der vorliegende Recherchenbericht wurde für alle Patentansprüche erstellt

| Recherchenort | Abschlußdatum der Recherche | Prüfer |
|---|---|---|
| DEN HAAG | 12-04-1989 | KAVCIC |